# EUROPEAN PATENT SPECIFICATION

(11) **EP 1 062 598 B1**
(45) Date of publication and mention of the grant of the patent: **08.10.2003**
(21) Application number: 99911032.3
(22) Date of filing: 01.03.1999
(51) Int. Cl.: G06F 17/30, H04N 7/15

(54) **APPARATUS AND METHOD FOR COLLABORATIVE DYNAMIC VIDEO ANNOTATION**
VERFAHREN UND VORRICHTUNG ZUM EINFÜGEN DYNAMISCHER KOMMENTARE IN EINEM VIDEOKONFERENZSYSTEM
APPAREIL ET PROCEDE DESTINES A L'ANNOTATION DYNAMIQUE DE LA VIDEO EN MODE COOPERATIF

(30) Priority: 13.03.1998 US 39019
(43) Date of publication of application: 27.12.2000
(73) Proprietor: SIEMENS CORPORATE RESEARCH, INC., Princeton, New Jersey 08540 (US)
(72) Inventor: LIOU, Shih-Ping, Robbinsville, NJ 08691 (US); HJELSVOLD, Rune, Plainsboro, NJ 08536 (US)
(74) Representative: O'Connell, David Christopher
(86) International application number: US9904506
(87) International publication number: WO99046702

(56) References cited:
- EP-A- 0 617 562
- EP-A- 0 669 587
- EP-A- 0 774 719
- US-A- 5 600 775
- US-A- 5 617 539
- US-A- 5 767 897

## Description

### FIELD OF THE INVENTION

The present invention relates to the field of collaborative video annotation, and more specifically, to apparatus for enabling multiple users to share their views about a video content

### BACKGROUND OF THE INVENTION

Reference is made to a patent application entitled Method and Apparatus for Creating Dynamic Object Markers in a Video Clip being filed on even date herewith, and assigned to the same assignee as the present application, and whereof the disclosure is herein incorporated by reference to the extent it is not incompatible with the present application.

A situation can arise wherein two or more users wish to communicate in reference to a common object, for example, in reference to a video. An example of this could be where a soccer team coach wishes to consult with a colleague to seek advice. The soccer team coach might wish to show a taped video of a game and ask the colleague to explain, using the video, why one team failed to score in a given attack situation. In addition, the coach might wish to record this discussion and show it later to other coaches to get more opinions.

In another scenario, a student could be taking a training course being given at a remote location from where a course instructor is located. It may be that the student cannot understand a procedure being taught in the course. The student can then call the instructor over the Internet phone to find out how such a procedure should be performed. The instructor can first browse through the training video together with the student to find the clip where the difficulty can be identified. The student may then ask various questions of the instructor about that procedure. For example, the instructor may then decide to show the student another video, which offers more detailed information. The instructor may then annotate this video using collaborative video annotation tools to explain to the student how this procedure should be performed.

A need exists for systems and products to provide services such as those described above. One such product is the Sprint's Drums system which allows two users to view video simultaneously by using the Shared Movie Player that runs on Silicon Graphics, Inc. computers. The shared video playback starts with one of the users sending the video file in SGI Movie Player format to be shared with the other user. Once the complete video has been transferred, either of the two users can initiate video playback. The playback control is also shared. Either of the two users can pause the video, jump to a random position in the video by use of a scrollbar, or playback video in reverse direction.

However, the Shared Movie Player generally does not provide certain features such as graphical annotation on top of the video window. In order to add graphical annotations, the user will have to pause the video, copy and paste the current frame to an ordinary shared whiteboard application.

A Tele-Pointer, which is a device for controlling the appearance and position of a cursor or pointer on computer displays from a remote location, is also typically not provided; the video window itself is not shared and the users do not have any means for sharing a pointing device in either play or pause mode.

Generally an integrated audio conferencing mixing conference audio with video sound-track is not provided: a regular telephone connection is typically used for user-to-user dialogues.

In such system, recording/playback of shared playback session is typically not provided nor is Multi-user conferencing: the Shared Movie Player only works for point-to-point conferencing.

Yet another product, Creative Partner from eMotion[2,3], contains three video annotation tools, but annotation has to be recorded off-line, there being no on-line collaboration support and during a period when the video playback is paused. These three annotation tools include one for graphical annotation, one for text annotation, and one for audio annotation. The Creative Partner video player allows the user to control video playback and to invoke one of the three annotation tools provided. Annotation can only be attached to the video in pause mode. The user selects the appropriate annotation tool, points to a given image coordinate on the video frame to which the annotation is attached. The user will then be able to record the given annotation. The annotation is not related to a video segment, it being only related to the frame to which it was attached. During playback, the Creative Partner video player will pause at any video frame having annotations attached. The user will have to activate playback of audio annotations and to resume video playback. The annotations are removed from the video window, once video playback is resumed.

US 5,617,539 (Ludwig et al.) discloses a multimedia collaboration system that integrates separate real-time and asynchronous networks in a manner that is interoperable across different computer and network operating system platforms. EP 0,617,562 discloses a system for playing back selectively a desired part of continuous data by using an input event as a clue.

Helpful background information can be found in U.S. Patent No. 5,600,775, issued February 4, 1997 in the names of King et al, and entitled METHOD AND APPARATUS FOR ANNOTATING FULL MOTION VIDEO AND OTHER INDEXED DATA STRUCTURES, and at Internet site
http://www.emotion.com/html/creativepartner product page.html.

### SUMMARY OF THE INVENTION

It is herein recognized that there is a continuing need for an apparatus to provide the following functional features which relate to aspects of the present invention.

On-line multi-point group discussions on video content over heterogeneous networks with Tele-Pointer support;
synchronized video playback, overlaid with voice comments as well as dynamic graphical annotation during group discussion;
dynamic adjustment of playback speed during synchronized video playback and recording of group discussion sessions;
in response to an existing recorded annotation session, conduct subsequent on-line multi-point group discussions and annotate during synchronized playback of recorded annotations; and
attachment of any tool to help browsing of video content and creation of dynamic markers for static as well as dynamic objects.

In collaborative dynamic video annotation applications, it is generally considered unlikely that the participants in the group discussion will either own the same type of computer equipment or be physically be present in the same building. It is also considered in general unlikely that each participant can be required to have a connection of equal data-rate to the Internet.

It is herein recognized that a desirable solution to the above problems should provide enough flexibility to overcome problems due to the existence of heterogeneous environments. For example, a desirable solution, in accordance with an aspect of the present invention, can allow people to use a Public Switched Telecommunications Network (PSTN), if quality of audio is of concern, and the Internet Phone (IP), if cost is a greater concern.

Tele-Pointers are an important part of a group discussion. Without them, it is practically impossible to know what each participant is pointing at. It is herein recognized that since video is a dynamic document, it is more helpful, in accordance with an aspect of the present invention, if each participant can make their own cursor visible on the screens of other participants.

Since video content is difficult to describe verbally, it is herein recognized, in accordance with an aspect of the present invention, that it is important for all participants to see the same video frame at the same time. It is also required that any participant be able to annotate, such as with graphical drawings or texts, on top of a video frame independently of the state of the video player and for all participants to see the same annotations on each of their screen at the same time. In addition, since participants are usually located in respective remote locations, the ability to have full duplex multi-point voice communication is considered essential. The system should preferably also be able to mix the audio track in the video with the voice of all participants all the time.

Sometimes, annotating simultaneously with voice and graphical drawings while the video is being played is not a very straightforward task. It is herein recognized that, in accordance with an aspect of the present invention, any participant should be able to dynamically adjust the shared video playback speed during the group discussion. The entire group discussion should preferably be able to be recorded and played back in the same sequence in which it happened. The recording should preferably include all VCR commands, graphical drawings/texts, and voice comments, time-stamped for later playback.

Playback of a recorded annotation can occur in a stand-alone mode or an on-line collaboration mode. In the second case, the playback of the recorded annotation should be synchronized among all participants. in accordance with an aspect of the present invention, any participant should be able to annotate while the playback is going on and record new annotations in a separate record.

In accordance with an aspect of the present invention, during a collaborative dynamic video annotation, any participant is able to use add-on tools to facilitate the discussion. One such tool is a video browser which allows a user to jump to random points in the video. While the video is being played, proper places in the tool are preferably be highlighted to reflect the frame that is currently being played on the screen of each participant. Another tool that may be implemented is the tool that allows any participant to create dynamic object markers. A dynamic object marker is a graphical drawing (usually assembled from polygons) that highlights the locution of an object of interest in a video frame. The dynamic marker indicates dynamic objects and dynamic parameters relating to a steady object. Since the location of a dynamic object generally changes from frame to frame, this tool is provided in accordance with the invention to help locate this object in all frames between a selected pair of video frames. This tool, when invoked, will create a marker for all frames between a selected pair of video frames. The system preferably also provides a tool that creates dynamic markers for steady objects. This is useful when the object of interest contains dynamic information parameters, for example, current flow in an electrically conductive wire.

In accordance with the present invention, a computer based system or apparatus provides collaborative dynamic video annotation, recording of such a collaborative session, synchronized playback of such a recorded annotation, and annotation/recording during playback of a recorded annotation. The apparatus comprises a computer readable storage medium having a computer program stored thereon performing the steps of (a) choosing a network service and starting or joining a conference; (b) loading a video or a recorded annotation file; (c) performing simultaneous graphical, text, and audio annotation, with the support of tell-pointers, VCR controls, video browses, and dynamic marker creation tools; and (d) recording of a collaborative session.

The system in accordance with the invention is a client/server model. The client essentially comprises a shared multi-media player with synchronized multi-point VCR control. The window that displays live video frames is also a drawing board where different people can place graphical objects from different clients at the same time. In addition, the system provides multi-point full duplex voice connection and the joint voice comments are mixed with the audio track in the video currently being played.

The network service in Step (a) includes any of the Internet TCP/IP, IPX, Modem, and Serial connection. The video file described in Step (b) is located locally with the client. Step (c) can be executed independently of whether the video player is in the play or pause modes and the playback among multiple clients is loosely synchronized, as explained below, while the speed of the video playback can be adjusted dynamically during synchronized playback. Step (d) records all visible activities in the collaborative session, such as lines, texts, Tele-Pointers, markers, as well as voice comments exchanged during the session.

It is important for any shared applications to serialize all events that occurred during a session. In order to implement a shared but synchronized multi-media player while giving all participants an equal access to the VCR control, the player action is delayed while the VCR button is first pressed. Instead of interpreting a VCR command immediately on a client machine, a VCR command is sent to the server, serialized sequentially, and sent back to all client machines. Only after having received merged VCR commands from the server does the player then take action.

In order to synchronize video playback among all participants, some cooperation is required between all video players. This can be done on a frame-by-frame basis, which is very costly and difficult to realize in reality without sacrificing the playback quality. In accordance with the present invention, it is considered preferable to synchronize on a VCR command-by-command basis. The current frame at the time the VCR control button is first pressed is recorded and each traditional VCR command is converted into one of the two types of new VCR commands, namely "JUMP-PLAY frame-number frame-rate" and "JUMP-PAUSE frame-number". For example, suppose a PLAY button is pressed while the player is on frame 300. The message sent to the server and eventually received by all clients will be "JUMP-PLAY 300 1.0" instead of "PLAY", that is, the VCR will seek to frame 300 and then start playing the video at normal speed.

Another component of the present invention is the ability to mix audio signals and to overlay graphics with video frames. Some known audio/graphic hardware, such as Parallax board offers such a functionality. Even if a graphic overlay is supported by hardware, the system still needs to handle the drawing of Tele-Pointers and graphical annotations separately. This is because Tele-Pointers may occlude graphical annotations and graphical annotations need to be restored once Tele-Pointers move away from their current position.

In order for the system to play a recorded annotation session synchronously on the screens of all participants, it is only necessary to record, with timestamp, all the messages that reached the server during the discussion session and send them to all clients according to the timestamp during playback. This will also allow each participant to annotate during playback of recorded annotation.

In accordance with an aspect of the invention, a method for dynamic video annotation among a plurality of users at respective locations, utilizing programmable computer apparatus with information storage and retrieval capability, the method comprises the steps of: selecting a network service coupled to the computer, performing one of (a) starting and (b) joining a collaborative session among the users; loading one of (a) a video and (b) a recorded annotation file; performing annotation of at least one of graphical, text, and audio annotation; and storing the collaborative session.

In accordance with another aspect of the invention a method for dynamic video annotation among a plurality of users, utilizing programmable computer apparatus with information storage and retrieval capability, the method comprises the steps of: selecting a network service coupled to the computer; joining a collaborative session among the users; loading one of (a) a video and (b) a recorded annotation file; performing annotation of at least one of graphical, text, and audio annotation; and storing the collaborative session.

In accordance with another aspect of the invention apparatus for dynamic video annotation among a plurality of users; the apparatus comprises programmable computer apparatus with information storage and retrieval capability; a user interface coupled to the computer apparatus for performing selection of a network service, a user interface coupled to the computer apparatus for performing one of (a) starting and (b) joining a collaborative session among the users; a user interface coupled to the computer apparatus for loading one of (a) a video and (b) a recorded annotation file; a user interface coupled to the computer apparatus for performing annotation of at least one of graphical, text, and audio annotation; and a user interface coupled to the computer apparatus for storing the collaborative session.

In accordance with another aspect of the invention apparatus for enabling a plurality of users at respective locations to participate in a collaborative session regarding content of a video; to record such a collaborative session; to annotate/record during playback of a recorded session; and to play back synchronously such a recorded annotated session, wherein the apparatus comprises a shared video player/recorder function (VCR) available to each of the users, with multi-point VCR control exhibiting dynamic speed adjustment, and an ability to show dynamic markers; a function by which any of the users can play or stop the video; jump to a different location in the video; dynamically change video play speed; the shared video player/recorder function available to each of the users being synchronized at the same video frame whenever any VCR activity occurs; and apparatus for displaying a dynamic marker when a frame to which such a marker is attached is displayed.

In accordance with another aspect of the invention, apparatus for enabling a plurality of users at respective locations to participate in a collaborative session regarding content of a video; to record such a collaborative session; to annotate/record during playback of a recorded session; and to play back synchronously such a recorded annotated session, wherein the apparatus comprises a shared video player/recorder function (VCR) exhibiting a window available to each of the users, with multi-point VCR control exhibiting dynamic speed adjustment, and an ability to show dynamic markers; a function by which any of the users can play or stop the video; jump to a different location in the video; dynamically change video play speed; the shared video player/recorder function available to each of the users being synchronized at the same video frame whenever any VCR activity occurs; apparatus for displaying a dynamic marker when a frame to which such a marker is attached is displayed; and the shared video player/recorder function window acting as a shared whiteboard with Tele-Pointer support for supporting free-hand drawing and text.

In accordance with another aspect of the invention a method for dynamic video annotation among a plurality of users utilizes a programmable computer and comprises the steps of: selecting a network service coupled to the computer; performing one of (a) starting and (b) joining a collaborative session among the users; loading one of (a) a video and (b) a recorded annotation file; performing annotation of at least one of graphical, text, and audio annotation; and storing the collaborative session.

### BRIEF DESCRIPTION OF THE DRAWINGS

The invention will be better understood from the following detailed description in conjunction with the Drawing, in which
Fig.1 is a diagram illustrating a collaborative dynamic annotation session over Public Switched Telecommunications Network (PSTN) in accordance with the invention;
Fig. 2 is a diagram illustrating a collaborative dynamic annotation session over Internet Phone (IP) in accordance with the invention;
Fig. 3 is a diagram illustrating a front-end user interface in accordance with the invention;
Fig. 4 is a diagram illustrating a main client user interface in accordance with the invention;
Fig. 5 is a diagram illustrating a user interface in accordance with the invention for deleting dynamic markers by name;
Fig. 6 is a diagram illustrating a video browser interface in accordance with the invention;
Fig. 7 is a diagram illustrating a dynamic object marker creation tool interface in accordance with the invention;
Fig. 8 is a diagram illustrating the system architecture in accordance with the invention;
Fig. 9 is a diagram illustrating the system message flow in accordance with the invention; and
Fig. 10 is a diagram illustrating an example that shows how event messages are communicated in accordance with the invention.

### DETAILED DESCRIPTION OF THE PREFERRED EMBODIMENTS

The invention features a shared "video player" with multi-point VCR control, dynamic speed adjustment, and the ability to show dynamic markers. It is emphasized however that the '"video player" is contemplated in the present invention to be either (a) a simulated video player function provided by a computer with stored video in its memory and simulated video player controls or (b) an actual VCR operated in conjunction with the rest of the system. Accordingly, it is herein intended for simplicity and convenience to refer in the present patent application to a video player, video player/recorder, video recorder/player or VCR, by which is meant either a simulated or an actual VCR or video player/recorder, or as a VCR function or a video recorder/player function, according as a particular embodiment may be constituted.

It is also understood that the apparatus may utilize a television receiver apparatus for the video display function, in association with a computer and a simulated or actual hardware to provide the functions herein disclosed.

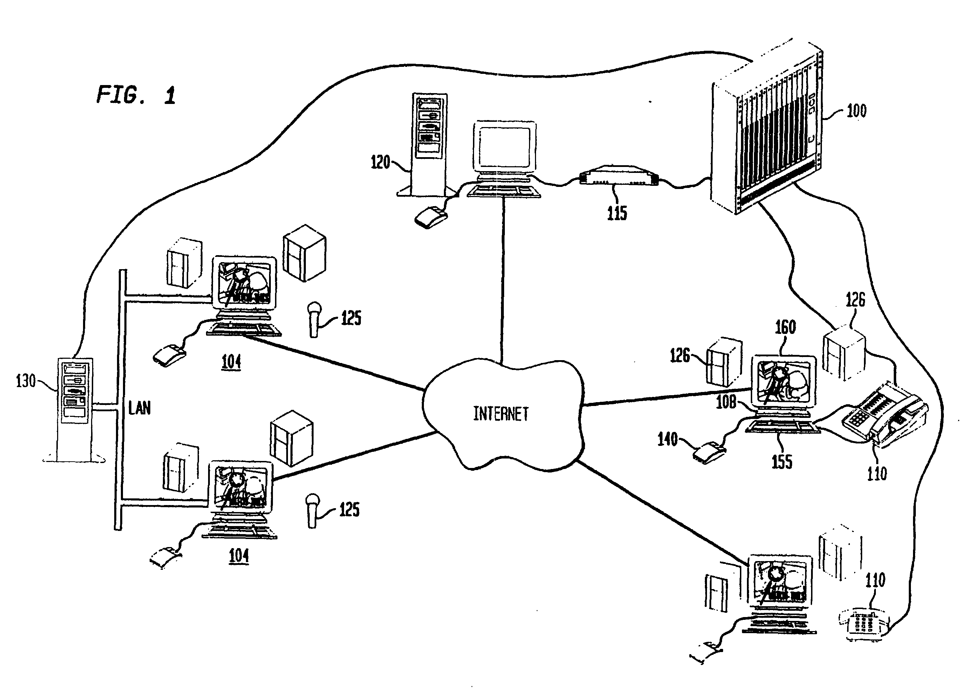

Fig.1 shows an embodiment illustrating how the invention is utilized in conjunction with a public switched telephone network A telephone switch 100 is coupled to a computer 130, which in turn is coupled by way of a local area network (LAN) to each of a client set-up, 102 and 104. Client set-ups102 and 104 are each equipped with a microphone, 125, respectively. Telephone switch 100 is coupled to a collaborative dynamic video annotation server 120 by way of a computer modem 115. Telephone switch 100 is also coupled a modem 115. Telephone switch 100 is coupled to telephones 110 and a monitor. Further computers, monitors, speakers, and telephones similar to those shown in Fig. 1 may be coupled to the system as shown, although not illustrated in Fig. 1.

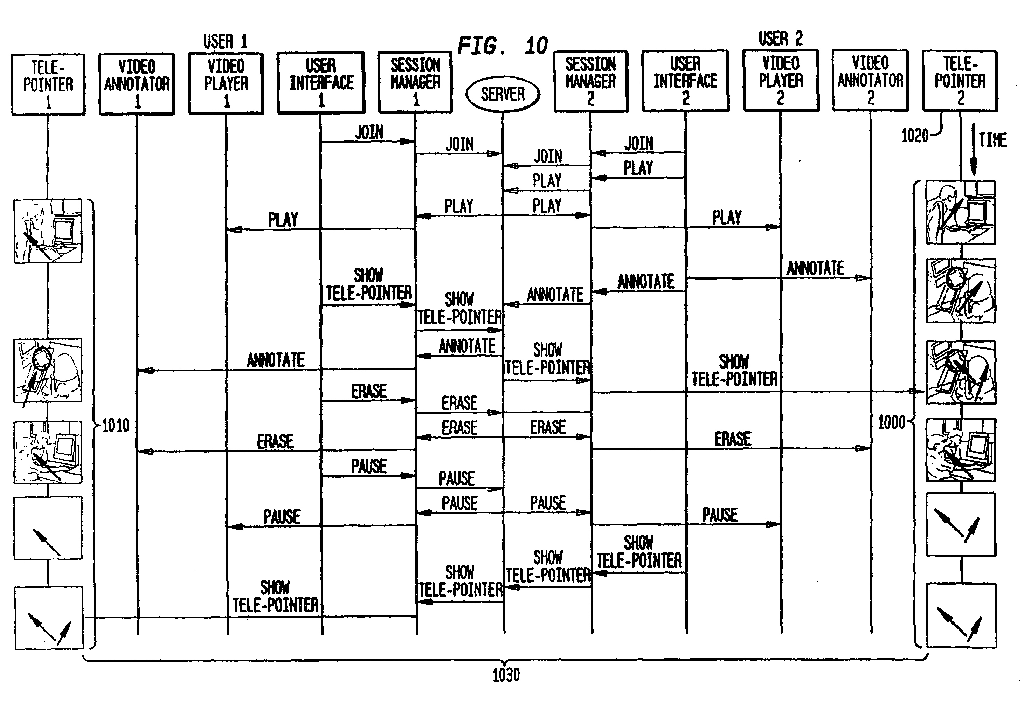

Telephone switch 100 is responsible for handling a telephone conference. In this setup, participants in the conference can also use an IP-PSTN (Internet phone - Public switched telephone network). bridge 130 to allow Intranet Phone users to use the public switched telephone network. The collaborative dynamic video annotation server 120, in accordance with the invention, handles all system messages, such as those marked by reference numeral 1030 in Fig 10, sent by clients over the Internet. Server 120 also connects to the telephone conference switch 100 by a computer modem 115. There are two types of clients or participants. One utilizes a regular telephone connection 110 and the other utilizes LAN coupled Intranet Phone connections. Both types of clients are equipped with a mouse 140, a keyboard 155, a pair of speakers 126, a monitor 160, and a main computer 108, coupled as shown in Fig. 1. For a computer equipped with an Intranet phone connection, a microphone 125 is required.

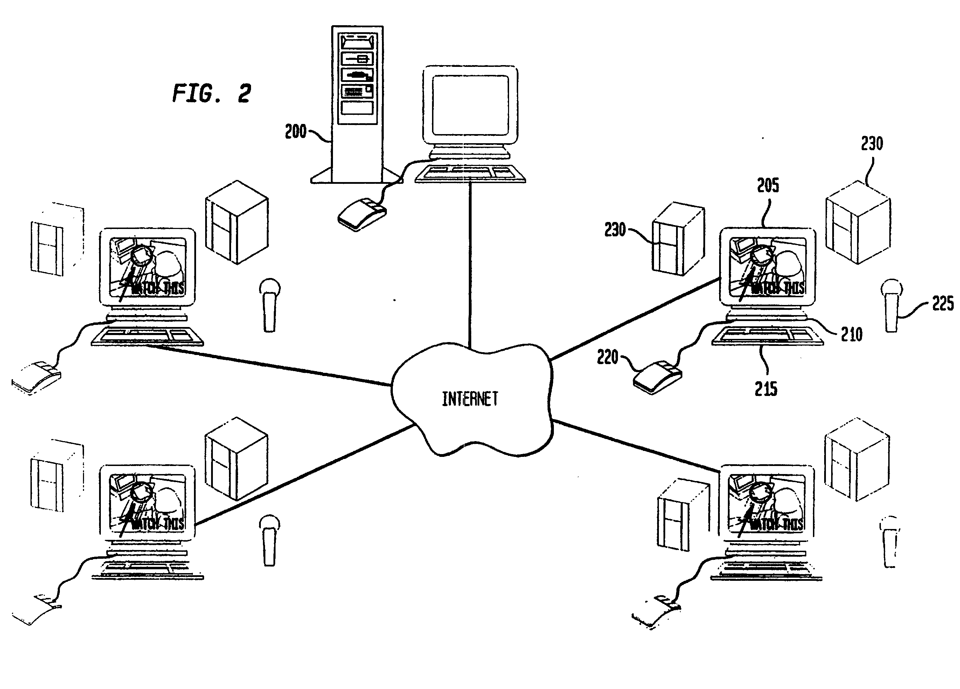

An embodiment in Fig.2 shows the invention as utilized in an Internet Phone environment. In this setup, the 200, providing the functionalities herein described and coupled to the Internet, handles all event messages sent by clients over the Internet. This server also acts like a digital phone switch, mixing all or part of voice comments spoken by conference participants and broadcasting the mixed signals back to all clients. All clients are each equipped with a mouse 220, a keyboard 215, a pair of speakers 230, a microphone 225, a monitor 205, and a main computer 210 coupled to the Internet.

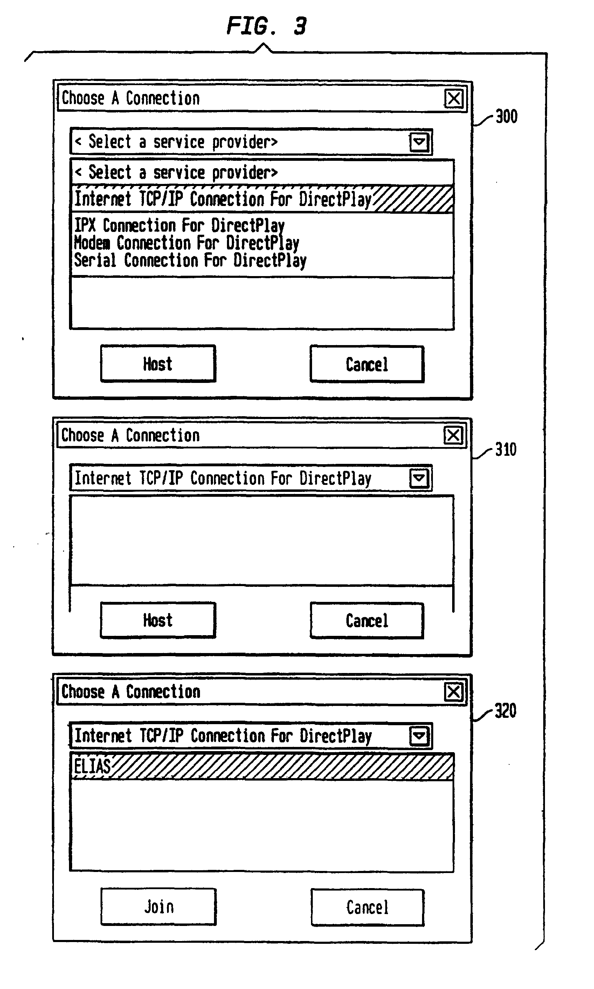

Fig.3 illustrates an embodiment of a front-end interface in accordance with the invention, including optionally a telephone dialer button. In accordance with an embodiment of the invention, network service differences are hidden under a software layer through the use of Microsoft's DirectPlay or any software that implements the T.123 standard. 300 shows an interface that asks the user to select which network service to use. The front-end server side user interface is 310 which prompts the user/operator to select a service provider. The client side interface is 320, which selects a service provider and eventually the collaborative dynamic video annotation server.

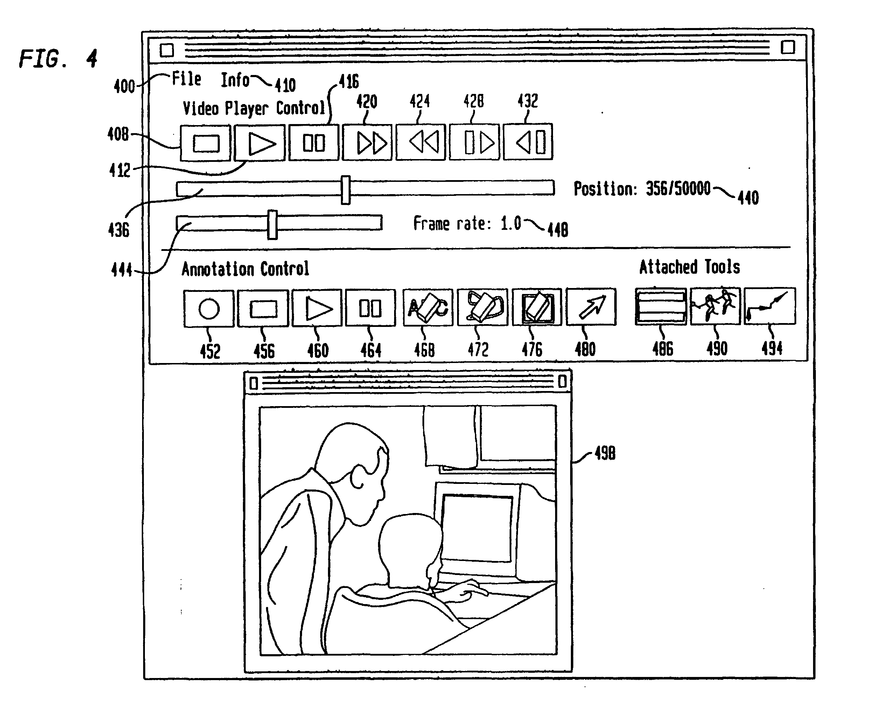

Fig.4 is shows an embodiment of a main client user interface in accordance with the invention. A user first selects a video file or a recorded annotation file to load using interface 400, while interface 410 gives brief summary instructions on its usage. Video frames are displayed in a window 498. A button 408 (stop), 412(play), 416(pause), 420(fast forward), 424(fast rewind), 428(step forward), and 432 (step backward) provide the basic VCR control functions for playing the video. A slider 436 shows the current video position and also provides a means for a user to randomly jump to any frame in the video. Text display 440 displays the current frame number over the total frame number comprised in the video. A user can dynamically adjust the play speed by moving a slider 444 or by pressing the key + , normally provided on the standard keyboard, for increasing current frame rate by 0.1 frame/sec and the key - for decreasing current frame rate by 0.1 frame/sec. The current frame rate is displayed in 448.

In order to allow a user to control the playback of a recorded annotation, while permitting them to change the course of video playback, a second set of VCR control, 452(record), 456(stop), 460(play), 464(pause), is provided on the main client user interface. These two sets of VCR controls are active simultaneously. However, when any of the first set of buttons (408, 412, 416, 420, 424, 428, 432) are pressed, the playback of the recorded annotation will automatically be stopped. Similarly, if a user starts playing a recorded annotation while the first set of VCR control is active, the system will also stop the current video playback activity. An exception is the recording activity, button 452, which will not be stopped even if the user presses any of the first set of buttons.

In accordance with the invention, a user can make a free-hand drawing by holding down the left mouse button while moving the mouse cursor on the video frame window 498. The lines will be shown on all clients' video frames in the same color as selected by the system or by the user on a per-user basis. A user can also type a text string on the video frame window 498 by first right clicking the mouse button.. When this happens, the system will pop up a text edit window only on that particular client's screen. The user can then type any single or multiple line text strings and click on the OK button when ready. Only at that time, the typed string(s) will appear on all clients' video frames at the place where the right mouse click occurred. Note that during the typing process, the conference activities can continue. A user can also turn on their own Tele-Pointer to enable other participants to know where they are pointing the mouse. This is accomplished by pressing the button 480. In order not to confuse a user with too many graphical objects on screen, all graphical annotations, text annotations, and Tele-Pointers relating to the same user are drawn in the same color.

The system also allows a user to erase the content of all graphical annotations by pressing button 472, the content of all text annotations by pressing button 468 in the described embodiment, and the record of certain dynamic markers by pressing button 476.

Three attached tools are shown in the main client user interface in Fig. 4. They are a video browser 486, a dynamic marker creation tool for dynamic objects 490, a dynamic marker creation tool for steady (or static) objects 494. To start the first two tools, just press the corresponding buttons. To start the third tool, a user has to first pause the video, then click on button 494, and finally draw a free-hand curve on the video frame window 498.

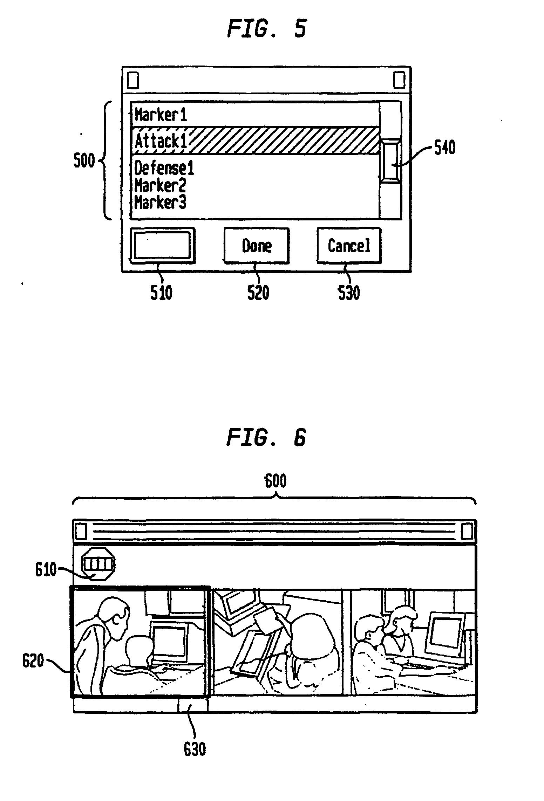

Fig. 5 illustrates an embodiment of a user interface in accordance with the invention for deleting dynamic markers by name. As noted above, a dynamic marker indicates the location of a dynamic object or the dynamic parameter pertaining to a static object. Each name is entered by the user who creates the marker. A list of marker names (500) is shown. A user can move a scroll bar (540) to view the whole list, select a name from the list, and click on a button 510 to delete it. After deleting all unwanted markers, the user can click on a button 520 to terminate this pop-up window. If the user starts this pop-up window by mistake, they can click on a button 530 to terminate this window.

Fig. 6 illustrates the video browser tool. This tool displays the first frame of each shot in thumbnail picture 600. A user can use a scroll bar 630 to quickly glance through all thumbnail pictures and click on button 610 to quit the video browser. While the video is playing, the corresponding shot of the current video frame will be synchronously highlighted in red frame 620.

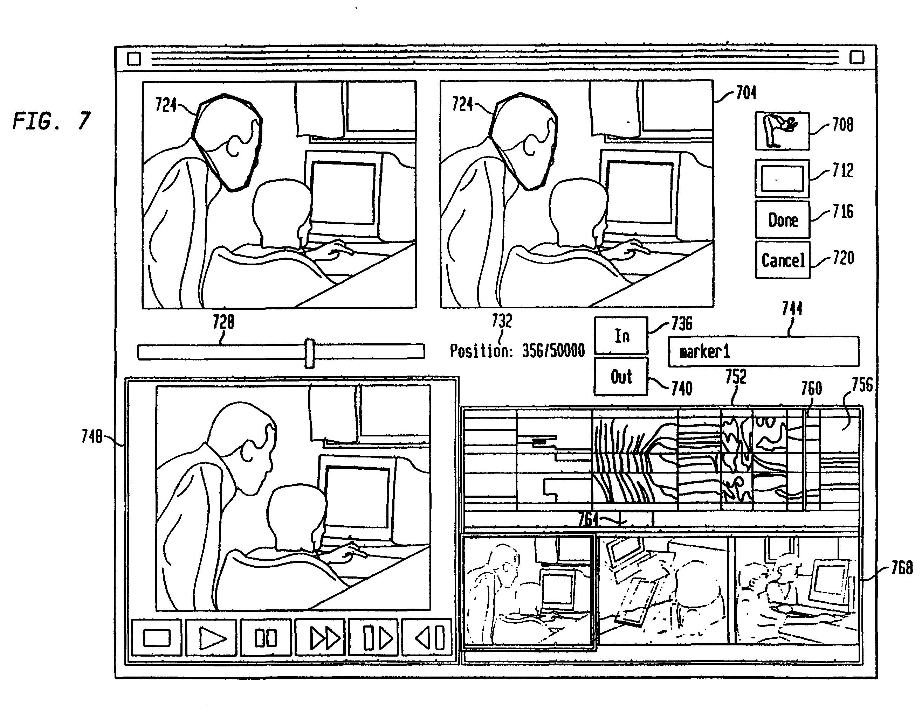

Fig. 7 is a diagram that illustrates the tool for creating dynamic object markers. This tool provides a separate video player 748, a slider 728, a current frame indicator 732, a video browser 768, and a cross-section viewer 752 to assist a user in finding a clip of interest. After selecting an IN point in the video by pressing button 736 and an OUT point in the video by pressing button 740, the video frame corresponding to the IN point will be displayed in window 700 and the OUT point frame will be displayed in window 704. The cross-section image 756 is generated directly from the video by (1) sampling the middle row and the middle column from each every image, (2) collecting all samples over time, (3) combining them into one image, and (4) finally segmenting the image into at least two bands according to the list of detected shots. This representation provides a level of abstraction that reveals the continuity of video frames. A scroll bar 764 allows for a quick glance, while the current frame indicator 760 is synchronized with the position of the video.

Once the IN and the OUT point video frames are displayed on window 700 and 704, a user can draw poly-lines, being a sequence of lines such as shown by reference numeral 724 in Fig. 7, to outline the boundary of the object in each window. If there is a mistake, the user can erase these lines by pressing button 712. After the poly-lines are drawn, a user can type a name in box 744 for the marker and click on button 708 to ask the server to extract the boundary of the same object in all frames between the IN and the OUT point. The same steps can be repeated until the button 716 is pressed. The user can also cancel operation of this tool by pressing button 720.

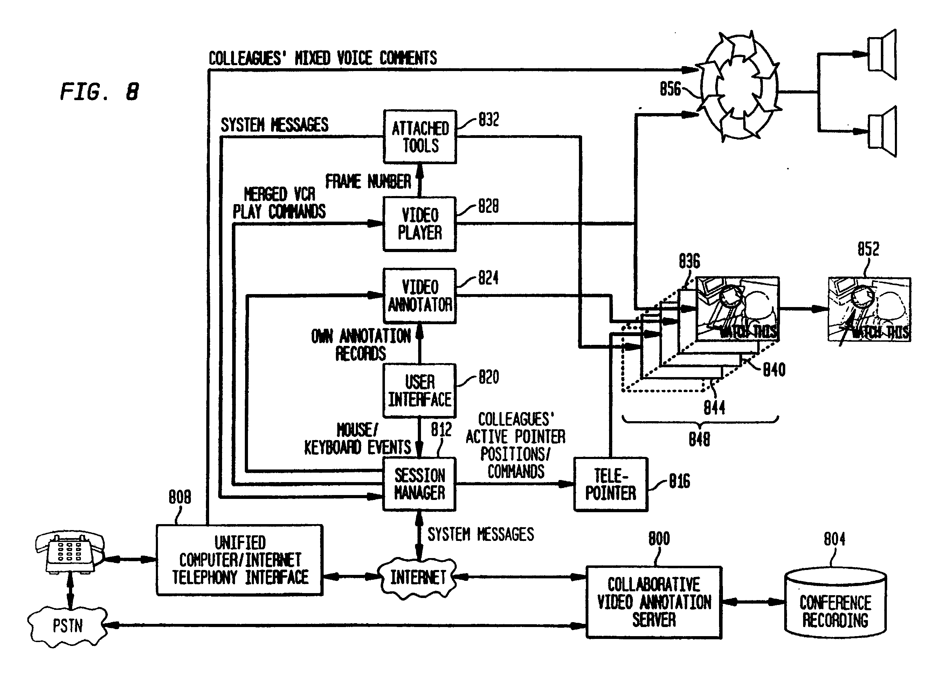

Fig. 8 illustrates the system architecture for an embodiment in accordance with the principles of the invention.. The Collaborative Video Annotation Server 800 receives messages from each session manager 812, serializes them, and re-sends them to every session manager. It also manages the conference, keeping a record of all participants as well as the state of the conference. Such state information includes video player state, including play/pause and current frame number, Tele-Pointer state, including show/hide and current position, annotations, including graphical and text currently on screen, video filename being loaded, and dynamic object markers (marker coordinates and associated frames. It is also responsible for bringing a new participant up to the current state of the conference and for recording a collaborative discussion into a single script file for later playback. The final overlaid videograms are represented by reference numeral 852 and the recorded annotation by 804.

The session manager 812 serves as the mediator between the Server 800, with which it is coupled by way of the Internet, and the rest of client modules, 816, 820, 824, 828, 832. It acts like an intelligent message router, transforming mouse/keyboard events from user interface 820 into system messages and sending them to the collaborative video annotation server 800, forwarding system messages from attached tools 832 to the collaborative video annotation server 800, and suppressing/distributing server messages to the rest of client modules. The system messages include all VCR-related commands, cursor positions, Tele-Pointer commands, annotation, both graphical and text records, and annotation commands. The session manager 812 suppresses all local annotation record messages and all local Tele-Pointer commands.

The Tele-Pointer 816 receives colleagues' active pointer positions as well as commands and draws them on the Tele-Pointer overlay plane 840. The Tele-Pointer commands include Show and Hide. The system maintains a color scheme so that the pointer and the annotation from the same participant will be drawn in the same color distinctive from each other.

The video player 828 decodes video into uncompressed audio and video frame and responds to a variety of VCR commands sent by the session manager 812. Due to the need for synchronized playback among all participants, it is preferred to map all traditional VCR-related commands into the following new commands:
PLAY => JUMP-PLAY CURRENT-FRAME 1.0
PAUSE ⇒ JUMP-PAUSE CURRENT-FRAME
STEP FORWARD => JUMP-PAUSE CURRENT-FRAME+1
STEP BACKWARD => JUMP-PAUSE CURRENT-FRAME-1
FAST FORWARD => JUMP-PLAY CURRENT-FRAME 2.0
FAST REWIND => JUMP-PLAY CURRENT-FRAME -2.0

As will be noted, the system has created only two distinctive types of VCR commands, namely JUMP-PLAY frame-number frame-rate and JUMP-PAUSE frame-number. To support the need of dynamic adjustment of playback speed, the system adds two new VCR-related functions, + and -, and maps them to JUMP-PLAY by the following ways:
+ => JUMP-PLAY CURRENT-FRAME CURRENT-RATE+0.1
- => JUMP-PLAY CURRENT-FRAME CURRENT-RATE-0.1

User interface 820 provides the elements of the player interface such as VCR controls, Tele-Pointer controls, the ability to launch attached tools 832, and monitors any mouse/keyboard events. Mouse/keyboard events related to annotation are sent to the video annotator 824, whereof the function is described below, while all mouse/keyboard events are sent to the session manager 812 for further interpretation. As was mentioned above, to draw any graphical annotation, the participant should hold down the left button, while moving the mouse. To draw a text annotation, the participant should click on the right button and enter a text string on the popped-up box.

The Audio Mixer 856 mixes the uncompressed audio signal generated by the video player with the audio output from the unified computer/Internet telephony interface, and sends it to the speaker.

The graphics overlay/Image mixer 848 overlays on top of the decoded video frame the graphical annotation, text annotation, and Tele-Pointer icons. This overlay has to be done efficiently and effectively because these have to be updated at a video rate. The system should set up a few off-screen planes (image buffers), two for video frame, one for graphical annotation 836, one for text annotation 836, one for Tele-Pointers 840, one for dynamic marker for dynamic objects 844, and one for dynamic marker for steady objects 844. One video frame buffer is a duplicated copy of the other for restoring purpose. This will allow the system to offer the ability to erase graphical annotation separately from text annotation and dynamic markers, as well as the ability to provide timely annotation/Tele-Pointer update without requiring a fast video frame rate. In order to provide timely annotation/Tele-Pointer updates, the system has to update annotation and Tele-Pointers on a regular basis independently of whether the next video frame is ready. During the update of annotations and Tele-Pointers, it is also responsible for restoring part of the background video frame that is uncovered by the motion of Tele-Pointers and the erase of graphical/text annotations. This is the reason for having two video frame buffers in accordance with the principles of the invention.

The video annotator 824 receives local client's and colleagues' active annotation records and commands to draw on the annotation overlay 836. Unlike local VCR control commands whose action is delayed, the system in accordance with the invention handles local client's annotation drawings immediately. This is because prompt feedback is more important. As was described earlier, in accordance with the principles of the invention, the drawings, text, and Tele-Pointers related to the same participant will be drawn in the same color distinctive from other participants.

The attached tools 832 are components in accordance with the principles of the invention that can help participants to browse video content and to create dynamic markers for static as well as dynamic objects. For example, a video browser displaying a list of thumbnail pictures representing the video is one such tool. If a participant makes any selection on the video browser, this video browser will send a VCR command to the session manager to allow the player to play from this particular point.

Another example is a tool for creation of dynamic markers for dynamic objects. A participant will first select two frames in the video and draw the boundary of this object in these two video frames. The request to find the location of this object in between these frames will be sent to the server. After the server finishes the request, it will send a message containing locations of this object in all in-between frames to all participants. Each participant will record this information locally and display markers whenever the video plays through such frames. Finally, to create dynamic markers for static objects requires a partiapant to first pause video, click on the tool button, and draw a curve. An animation of an arrow following the curve will be shown until a participant plays the video again.

In accordance with the principles of the invention, the Unified Computer/Internet Telephony Interface 808 provides an unified interface to computer or Internet telephony, which allows users to work with heterogeneous environment.

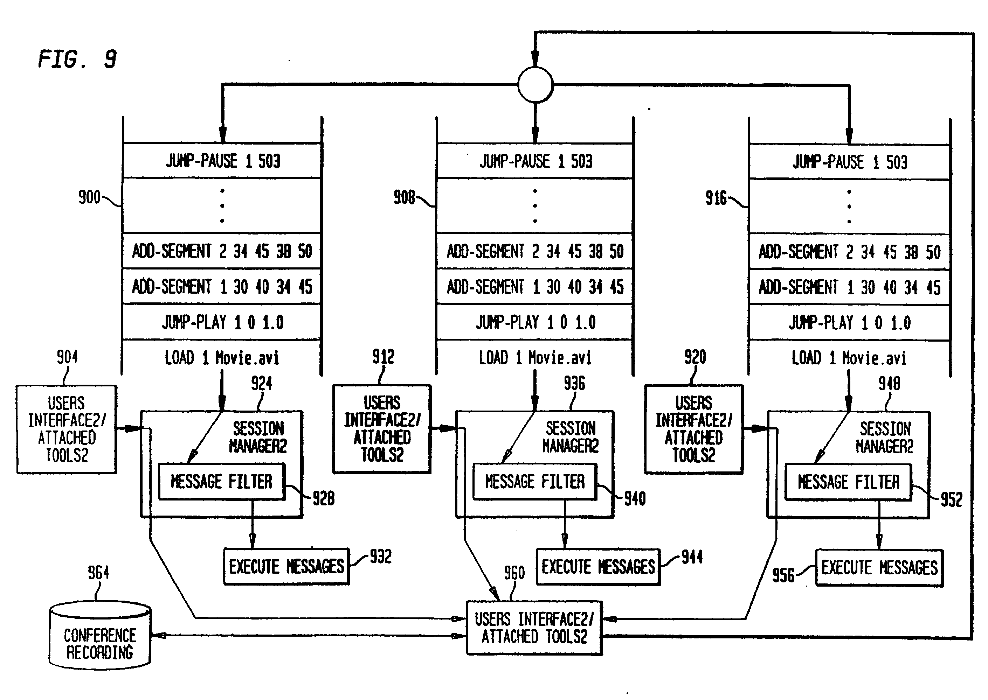

Fig. 9 illustrates the system message flow in accordance with the principles of the invention, where there are three clients in the collaborative session. Each client maintains its own message queue (900, 908, 916), where new messages may arrive at slightly different time but their order is preserved across all clients. These messages include loading of a video or recorded annotation file, modified VCR commands, annotation records/commands, Tele-Pointer records/commands, dynamic marker records/commands. Each session manager (924, 936, 948) is responsible for forwarding various messages sent by each user interface and attached tools (904, 912, 920) to the collaborative dynamic video annotation server (960) and for retrieving messages from the message queue (900, 908, 916). Each retrieved message is then filtered through a message filter (928, 940, 952) within the session manager (924, 936, 948) before being distributed to different client modules for execution (932, 944, 956). During the playback of a recorded annotation, the collaborative dynamic video annotation server (960) primarily retrieves messages from the conference recording (964), but it can still receive messages sent by each session manager (924, 936, 948). Each message recorded in the conference recording (964) precedes a time stamp. The collaborative dynamic video annotation server (960) retrieves these messages according to the time stamp. The messages coming from both sources are mixed and sent to each session manager (900, 908, 916) in the order the message is received. This ability to mix both recorded messages and live messages allow a user to annotate during the playback of a recorded annotation.

Fig. 10 illustrates an example showing how event messages are communicated and affect the appearance of each client screen. There are two clients in the conference in this example. The vertical direction 1020 indicates the time line, whereas the horizontal direction lists the collaborative dynamic video annotation server (server) and different client-side system components such as the Tele-Pointer, Video Annotator, Video Player, User Interface, and Session Manager. Two sets of screen dumps, 1000, and 1010 are displayed on the left and the right side of this diagram respectively, in the timeline order. Different types of typical messages 1030, such as Join, Play, Show Tele-Pointer, Annotate, Erase, Pause, are illustrated in the middle section of this figure, again in the timeline older. For simplicity reasons, only abbreviated message names are used in this illustration.

The present invention provides a new apparatus for permitting different people from different places to share their views about a video content, to record such a collaborative session, to play back synchronously such a recorded annotation, and to annotate/record during playback of a recorded annotation. The apparatus in accordance with the invention provides an environment for synchronous collaboration of any video content over heterogeneous networks. It is however possible to use the same apparatus to annotate a video or to playback a recorded annotation in a stand-alone scenario as well.

It is also understood that the apparatus may utilize a television receiver apparatus for the video display function, in association with a computer and a simulated or actual hardware VCR or video player/recorder.

As was stated above, the invention features a shared "video player" with multi-point VCR control, dynamic speed adjustment, and the ability to show dynamic markers. Any user can play or stop the video, jump to a different location in the video, or dynamically change the play speed, at any given time. Different players are synchronized at the same video frame whenever any VCR activity occurs. Dynamic markers are automatically drawn when the player displays those frames markers are attached to. Second, the video player window acts as a shared whiteboard with Tele-Pointer support, even if there is no hardware graphic overlay support. This shared whiteboard supports free-hand drawing and text. Any user can erase graphical or text annotation at any time. Third, the apparatus provides an easy way to attach any tools to the shared video player. When such tools are invoked, they will be activated on the side, while a collaborative session may still continue. All computation intensive tasks are done on the server side, without affecting the performance of the client. Fourth, all conference activities including joint voice comments can be recorded for later playback. These activities are time stamped to support synchronized playback. Fifth, any recorded conference session can be loaded and played synchronously on screens of all users with multi-point VCR control. The recorded joint voice comments are mixed with the audio track of the video during the playback. Sixth, any user can still annotate during the playback of a recorded annotation in a collaborative session with separate VCR controls. Finally, the new annotation together with the playback of a recorded annotation can again be recorded.

The invention is intended for implementation by computerized apparatus, preferably a programmable digital computer, as is per se well known in the art, with appropriate software, in conjunction with appropriate peripheral equipment as hereinabove described, for performing steps herein disclosed for practicing the present invention.

As will be understood, the invention has been described by way of non-limiting exemplary embodiments. Various modifications and additions will be apparent to those skilled in the art to which it pertains. For example, if hardware implementation is utilized to support video overlay and audio mixing, then the same functions may no,
longer be required in the form herein described by way of exemplary embodiments, such as Tele-Pointer, Video Annotator, audio mixer, and graphics overlay image mixer 848.

Such changes and modifications are contemplated to be within the inventive concept of the present invention and the scope of the appended claims.

## Claims

1. A method for dynamic video annotation among a plurality of users (102, 104) at respective locations, utilizing programmable computer apparatus with information storage and retrieval capability, said method comprising the steps of:
selecting a network service coupled to said computer; and,
in a collaborative session among said users:
playing stored video to said users, such that said users can control speed and location of the video playback;
accepting annotations (848) input by said users, associated with the stored video, said annotations comprising at least one of graphical, text, and audio annotations; and
storing said collaborative session.

2. A method for dynamic video annotation as recited in claim 1, including a step of playing back said collaborative session in a synchronous mode for ones of said users.

3. A method for dynamic video annotation as recited in claim 2, wherein said synchronous mode is a substantially synchronized mode.

4. A method for dynamic video annotation as recited in claim 1, including a step of storing or recording visible activities and any voice comments occurring during said collaborative session.

5. A method for dynamic video annotation as recited in claim 1, wherein said network service comprises at least one of Internet TCP/IP, IPX, Modem, and Serial connection.

6. A method for dynamic video annotation as recited in claim 1, wherein said step of accepting annotations comprises utilizing at least one of Tele-Pointers; video recorder/player controls; video browsers, graphical, text, and audio annotation; and dynamic marker creation tools.

7. A method for dynamic video annotation as recited in claim 6, wherein said video recorder/player exhibits play and pause modes and said step of accepting annotations can be performed independently of whether said video recorder/player is in either of said modes.

8. A method for dynamic video annotation as recited in claim 7, wherein said step of accepting annotations can be performed on a dynamic object of the stored video, and comprises the steps of;
selecting a first frame and a last frame of the annotation, and
indicating an outline of the dynamic object in each of the first frame and the last frame.

9. A method for dynamic video annotation in accordance with claim 7, including the steps of recording and playing back video from a video recorder/player coupled to said computer apparatus and having a user-operable control interface.

10. A method for dynamic video annotation in accordance with claim 6, including a step of individuals of said users annotating graphics on an overlay.

11. A method for dynamic video annotation in accordance with claim 6, including the steps of
individuals of said users using a Tele-Pointer; and
automatically restoring video and graphic portions covered over by said Tele-Pointer.

12. A method for dynamic video annotation in accordance with any preceding claim, further including the steps of individuals of said users playing or stopping said video, jumping to a different location in the video, and dynamically changing video play speed.

13. A method for dynamic video annotation in accordance with any preceding claim, wherein said video recorder/player available to each of said users is synchronized at the same video frame whenever any VCR activity occurs.

14. A method for dynamic video annotation in accordance with any preceding claim, including the steps of
providing a time-stamp all messages reaching said computer apparatus from said plurality of users; and
sending ones of said messages having been annotated and provided with said time-stamp to said users during said playing back.

15. A system for dynamic video annotation among a plurality of users (102, 104); said system comprising:
programmable computer apparatus with information storage and retrieval capability;
a user interface (820) coupled to said computer apparatus for performing selection of a network service; and,
in a collaborative session among said users:
means for playing stored video to said users, such that said users can control speed and location of the video playback;
means for accepting annotations input by said users, associated with the stored video, said annotations comprising at least one of graphical, text, and audio annotations(848); and
means for storing said collaborative session.

16. A system for dynamic video annotation among a plurality of users in accordance with claim 15, including a shared video recorder/player coupled to said computer apparatus and having a user-operable control interface, for recording visible activities and any voice comments during said collaborative session and playing back recorded annotations.

17. A system for dynamic video annotation among a plurality of users in accordance with claim 16, including means for enabling said users to annotate graphics on an overlay.

18. A system for dynamic video annotation among a plurality of users in accordance with claim 17, including means for supporting use of Tele-Pointer and for restoring video and graphic portions covered over by said Tele-Pointer.

19. A system for dynamic video annotation among a plurality of users in accordance with any one of claims 15 to 18, including means for providing a time-stamp on all messages reaching said computer apparatus from said plurality of users and sending said ones of said messages having been annotated and provided with a time-stamp to said users during said playing back so as to permit individual ones of said plurality of users annotate during said playing back of recorded annotations.

20. A system for dynamic video annotation among a plurality of users in accordance with any one of claims 15 to 19, wherein the annotations input by said user can be applied a dynamic object of the stored video, by use of a selection means for selecting a first frame and a last frame of the annotation, and an indication means for indicating an outline of the dynamic object in each of the first frame and the last frame.

21. A system for dynamic video annotation among a plurality of users in accordance with any one of claims 15 to 20, wherein the shared video player/recorder (VCR), available to each of said users, has a multi-point VCR control exhibiting dynamic speed adjustment, and an ability to show dynamic markers.

22. A system for dynamic video annotation among a plurality of users in accordance with any one of claims 15 to 21, further including a function by which any of said users can play or stop said video, jump to a different location in the video, and dynamically change video play speed.

23. A system for dynamic video annotation among a plurality of users in accordance with any one of claims 15 to 22, wherein said shared video player/recorder function available to each of said users is synchronized at the same video frame whenever any VCR activity occurs.

24. A system for dynamic video annotation among a plurality of users in accordance with any one of claims 15 to 23, further including means for displaying a dynamic marker when a frame to which such a marker is attached is displayed.

25. A system for dynamic video annotation among a plurality of users in accordance with any one of claims 15 to 24, wherein said shared video player/recorder function exhibits a window available to each of said users and said window acts as a shared whiteboard with Tele-Porter support for supporting free-hand drawing and text.

26. A system for dynamic video annotation among a plurality of users in accordance with any one of claims 15 to 25, wherein said shared video player/recorder function window acts as a shared switchboard with Tele-Pointer support for supporting free-hand drawing and text functions, independently of the presence of any hardware graphic overlay support.

27. A system for dynamic video annotation among a plurality of users in accordance with any one of claims 15 to 26, wherein any user can erase graphical or text annotation at any time.

28. A system for dynamic video annotation among a plurality of users in accordance with any one of claims 15 to 27 including means for attaching any of a plurality of tools to said shared video player function.

29. A system for dynamic video annotation among a plurality of users in accordance with any one of claims 15 to 28, wherein when any of said plurality tools are invoked, they will be activated on the side, while a collaborative session is permitted to continue.

30. A system for dynamic video annotation among a plurality of users in accordance with any one of claims 15 to 29, wherein said collaborative session activities, including joint voice comments, can be recorded for later playback.

31. A system for dynamic video annotation among a plurality of users in accordance with any one of claims 15 to 30 wherein said collaborative session activities are time stamped to support synchronized playback.

32. A system for dynamic video annotation among a plurality of users in accordance with any one of claims 15 to 31, wherein said recorded session can be loaded and played synchronously on screens of all users with multi-point VCR control.

33. A system for dynamic video annotation among a plurality of users in accordance with any one of claims 15 to 32, wherein recorded joint voice comments are mixed with the audio track of a video during playback.

34. A system for dynamic video annotation among a plurality of users in accordance with any one of claims 15 to 33, wherein any user can still annotate during the playback of a recorded annotation in a collaborative session with separate VCR controls to form a new annotation.

35. A system for dynamic video annotation among a plurality of users in accordance with any one of claims 15 to 34, wherein said new annotation together with playback of a recorded annotation can again be recorded.

## Patentansprüche

1. Verfahren zur dynamischen Videokommentierung zwischen zahlreichen Benutzern (102, 104) an jeweiligen Orten, wobei eine programmierbare Computereinrichtung verwendet wird, die Information speichern und finden kann, umfassend die Schritte:
das Auswählen eines Netzdienstes, der mit dem Computer verbunden ist; und
in einer gemeinsamen Arbeitssitzung zwischen den Benutzern:
das Wiedergeben gespeicherter Videos für die Benutzer, wobei die Benutzer die Geschwindigkeit und den Ort der Videowiedergabe kontrollieren können;
das Akzeptieren von Kommentaren (848), die die Benutzer eingeben und die zu dem gespeicherten Video gehören, wobei die Kommentare zumindest entweder einen graphischen Kommentar oder einen Textkommentar oder einen Audiokommentar enthalten; und
das Speichern der gemeinsamen Arbeitssitzung.

2. Verfahren zur dynamischen Videokommentierung nach Anspruch 1, enthaltend einen Schritt der Wiedergabe der gemeinsamen Arbeitssitzung in einem synchronen Modus für einzelne Benutzer.

3. Verfahren zur dynamischen Videokommentierung nach Anspruch 2, wobei der synchrone Modus ein im Wesentlichen synchronisierter Modus ist.

4. Verfahren zur dynamischen Videokommentierung nach Anspruch 1, umfassend einen Schritt des Speicherns oder Aufzeichnens sichtbarer Aktivitäten und sämtlicher Sprachkommentare, die während der gemeinsamen Arbeitssitzung auftreten.

5. Verfahren zur dynamischen Videokommentierung nach Anspruch 1, worin der Netzdienst mindestens eine der Verbindungen Internet-TCP/IP, IPX, Modem und seriellen Anschluss umfasst.

6. Verfahren zur dynamischen Videokommentierung nach Anspruch 1, worin der Schritt der Annahme von Kommentaren mindestens den Gebrauch eines der folgenden Hilfsmittel umfasst: Tele-Pointer; Steuerungen von Videorecordern bzw. Videospielern; Videobrowser und graphische Kommentare, Textkommentare und Audiokommentare; und dynamische Markererzeugungs-Werkzeuge.

7. Verfahren zur dynamischen Videokommentierung nach Anspruch 6, worin der Videorecorder bzw. Videospieler einen Wiedergabe- und einen Pausenmodus aufweist und der Schritt der Annahme von Kommentaren unabhängig davon ausgeführt werden kann, ob sich der Videorecorder bzw. Videospieler in einem der beiden Modi befindet.

8. Verfahren zur dynamischen Videokommentierung nach Anspruch 7, worin der Schritt der Annahme von Kommentaren auf einem dynamischen Objekt des gespeicherten Videos ausgeführt werden kann und die Schritte umfasst:
das Auswählen eines ersten Frames und eines letzten Frames des Kommentars, und
das Anzeigen eines Umrisses des dynamischen Objekts sowohl im ersten Frame als auch im letzten Frame.

9. Verfahren zur dynamischen Videokommentierung nach Anspruch 7, umfassend die Schritte des Aufzeichnens und Wiedergebens von Video auf bzw. von einem Videorecorder bzw. Videospieler, der mit der Computereinrichtung verbunden ist und eine vom Benutzer bedienbare Steuerschnittstelle hat.

10. Verfahren zur dynamischen Videokommentierung nach Anspruch 6, enthaltend einen Schritt, in dem einzelne Benutzer Graphikkommentare auf einem Overlay zufügen.

11. Verfahren zur dynamischen Videokommentierung nach Anspruch 6, umfassend die Schritte:
das Benutzen eines Tele-Pointers durch einzelne Benutzer; und
das automatische Wiederherstellen von Video- und Graphikabschnitten, die von dem Tele-Pointer abgedeckt sind.

12. Verfahren zur dynamischen Videokommentierung nach irgendeinem vorhergehenden Anspruch, zudem umfassend die Schritte, dass einzelne Benutzer das Video abspielen oder anhalten, an eine andere Stelle im Video springen und dynamisch die Wiedergabegeschwindigkeit des Videos verändern.

13. Verfahren zur dynamischen Videokommentierung nach irgendeinem vorhergehenden Anspruch, worin der für jeden Benutzer verfügbare Videorecorder bzw. Videospieler bei jeder beliebigen vorkommenden VCR-Aktivität auf den gleichen Videoframe synchronisiert ist.

14. Verfahren zur dynamischen Videokommentierung nach irgendeinem vorhergehenden Anspruch, umfassend die Schritte:
Bereitstellen eines Zeitstempels für alle Nachrichten, die die Computereinrichtung von den zahlreichen Benutzern erreichen; und
Senden einzelner Nachrichten, die kommentiert und mit dem Zeitstempel versehen worden sind, an die Benutzer während der Wiedergabe.

15. System zur dynamischen Videokommentierung zwischen zahlreichen Benutzern (102, 104), umfassend:
eine programmierbare Computereinrichtung, die Information speichern und finden kann;
eine mit der Computereinrichtung verbundene Benutzerschnittstelle (820), die die Auswahl eines Netzdienstes ausführt; und
in einer gemeinsamen Arbeitssitzung zwischen den Benutzern:
eine Einrichtung, die gespeichertes Video für die Benutzer wiedergibt, und zwar so, dass die Benutzer die Geschwindigkeit und den Ort der Videowiedergabe kontrollieren können;
eine Einrichtung, die von den Benutzern eingegebene Kommentare annimmt, die zu dem gespeicherten Video gehören, wobei die Kommentare zumindest einen graphischen Kommentar oder einen Textkommentar oder einen Audiokommentar (848) enthalten; und
eine Vorrichtung, die die gemeinsame Arbeitssitzung speichert.

16. System zur dynamischen Videokommentierung zwischen zahlreichen Benutzern nach Anspruch 15, umfassend einen gemeinsamen Videorecorder oder Videospieler, der mit der Computereinrichtung verbunden ist und eine durch die Benutzer bedienbare Schnittstelle aufweist und während der gemeinsamen Arbeitssitzung sichtbare Aktivitäten und sämtliche Sprachkommentare aufzeichnet und aufgezeichnete Kommentare wiedergibt.

17. System zur dynamischen Videokommentierung zwischen zahlreichen Benutzern nach Anspruch 16, das Mittel enthält, die es den Benutzern ermöglichen, graphische Kommentare auf einem Overlay zuzufügen.

18. System zur dynamischen Videokommentierung zwischen zahlreichen Benutzern nach Anspruch 17, umfassend Mittel zum Unterstützen des Gebrauchs von Tele-Pointern und zum Wiederherstellen von Video- und Graphikabschnitten, die von dem Tele-Pointer abgedeckt sind.

19. System zur dynamischen Videokommentierung zwischen zahlreichen Benutzern nach irgendeinem der Ansprüche 15 bis 18, umfassend Mittel zum Bereitstellen eines Zeitstempels für alle Nachrichten, die die Computereinrichtung von den zahlreichen Benutzern erreichen, und das Senden einzelner Nachrichten, die kommentiert und mit dem Zeitstempel versehen worden sind, an die Benutzer während der Wiedergabe, damit einzelne der zahlreichen Benutzer während der Wiedergabe aufgezeichneter Kommentare selbst Kommentar eingeben können.

20. System zur dynamischen Videokommentierung zwischen zahlreichen Benutzern nach irgendeinem der Ansprüche 15 bis 19, worin die von dem Benutzer eingegebenen Kommentare auf ein dynamisches Objekt des gespeicherten Videos angewendet werden können, und zwar durch den Gebrauch einer Auswahlvorrichtung zum Auswählen eines ersten Frames und eines letzten Frames des Kommentars, und einer Anzeigevorrichtung, die einen Umriss des dynamischen Objekts sowohl im ersten Frame als auch im letzten Frame anzeigt.

21. System zur dynamischen Videokommentierung zwischen zahlreichen Benutzern nach irgendeinem der Ansprüche 15 bis 20, worin der gemeinsame Videospieler bzw. Videorecorder (VCR), der für jeden Benutzer verfügbar . ist, eine Mehrpunkt-VCR-Steuerung aufweist, die eine dynamische Geschwindigkeitseinstellung aufweist sowie die Fähigkeit, dynamische Marker darzustellen.

22. System zur dynamischen Videokommentierung zwischen zahlreichen Benutzern nach irgendeinem der Ansprüche 15 bis 21, zudem umfassend eine Funktion, mit der jeder der Benutzer das Video abspielen bzw. anhalten, an eine andere Stelle in dem Video springen und die Video-Wiedergabegeschwindigkeit dynamisch verändern kann.

23. System zur dynamischen Videokommentierung zwischen zahlreichen Benutzern nach irgendeinem der Ansprüche 15 bis 22, worin die für jeden Benutzer verfügbare gemeinsame Videospieler- bzw. Videorecorderfunktion bei jeder beliebigen vorkommenden VCR-Aktivität auf den gleichen Videoframe synchronisiert ist.

24. System zur dynamischen Videokommentierung zwischen zahlreichen Benutzern nach irgendeinem der Ansprüche 15 bis 23, das zudem Mittel zum Darstellen eines dynamischen Markers enthält, wenn ein Frame wiedergegeben wird, dem ein solcher Marker zugeordnet ist.

25. System zur dynamischen Videokommentierung zwischen zahlreichen Benutzern nach irgendeinem der Ansprüche 15 bis 24, worin die gemeinsame Videospieler- bzw. Videorecorderfunktion ein Fenster aufweist, das für jeden Benutzer verfügbar ist, wobei das Fenster als gemeinsame Weißwandtafel mit Tele-Pointer-Unterstützung dient, die das Freihandzeichnen und Text unterstützt.

26. System zur dynamischen Videokommentierung zwischen zahlreichen Benutzern nach irgendeinem der Ansprüche 15 bis 25, worin das Videospieler- bzw. Videorecorder-Funktionsfenster als gemeinsame Schalttafel mit Tele-Pointer-Unterstützung dient, die das Freihandzeichnen und Textfunktionen unterstützt, und zwar unabhängig vom Vorhandensein irgendeiner Hardwaregraphik-Overlayunterstützung.

27. System zur dynamischen Videokommentierung zwischen zahlreichen Benutzern nach irgendeinem der Ansprüche 15 bis 26, worin jeder beliebige Benutzer zu jedem beliebigen Zeitpunkt Graphik- oder Textkommentare löschen kann.

28. System zur dynamischen Videokommentierung zwischen zahlreichen Benutzern nach irgendeinem der Ansprüche 15 bis 27, das Mittel umfasst, mit denen man der gemeinsamen Videospielerfunktion irgendein Werkzeug aus einer Anzahl Werkzeuge zufügen kann.

29. System zur dynamischen Videokommentierung zwischen zahlreichen Benutzern nach irgendeinem der Ansprüche 15 bis 28, worin, wenn irgendeines der zahlreichen Werkzeuge aufgerufen wird, dieses nebenher aktiviert wird, während die gemeinsame Arbeitssitzung weitergehen kann.

30. System zur dynamischen Videokommentierung zwischen zahlreichen Benutzern nach irgendeinem der Ansprüche 15 bis 29, worin die Aktivitäten der gemeinsamen Arbeitssitzung einschließlich der gemeinsamen Sprachkommentare für eine spätere Wiedergabe aufgezeichnet werden können.

31. System zur dynamischen Videokommentierung zwischen zahlreichen Benutzern nach irgendeinem der Ansprüche 15 bis 30, worin die Aktivitäten der gemeinsamen Arbeitssitzung mit einem Zeitstempel versehen werden, um eine synchronisierte Wiedergabe zu unterstützen.

32. System zur dynamischen Videokommentierung zwischen zahlreichen Benutzern nach irgendeinem der Ansprüche 15 bis 31, worin die aufgezeichnete Sitzung mit der Mehrpunkt-VCR-Steuerung auf den Bildschirmen aller Benutzer synchron geladen und abgespielt werden kann.

33. System zur dynamischen Videokommentierung zwischen zahlreichen Benutzern nach irgendeinem der Ansprüche 15 bis 32, wobei aufgezeichnete gemeinsame Sprachkommentare während der Wiedergabe mit der Audiospur eines Videos gemischt werden.

34. System zur dynamischen Videokommentierung zwischen zahlreichen Benutzern nach irgendeinem der Ansprüche 15 bis 33, worin jeder beliebige Benutzer während der Wiedergabe eines aufgezeichneten Kommentars in einer gemeinsamen Arbeitssitzung mit eigenen VCR-Steuerungen weitere Kommentare geben kann, um einen neuen Kommentar zu bilden.

35. System zur dynamischen Videokommentierung zwischen zahlreichen Benutzern nach irgendeinem der Ansprüche 15 bis 34, worin der neue Kommentar zusammen mit der Wiedergabe eines aufgezeichneten Kommentars erneut aufgezeichnet werden kann.

## Revendications

1. Procédé d'annotation dynamique d'une vidéo entre une pluralité d'utilisateurs (102, 104) situés en des emplacements respectifs, moyennant l'utilisation d'un dispositif d'ordinateur programmable comportant des capacités de mémorisation et de récupération d'informations, ledit procédé comprenant les étapes consistant à:
sélectionner un service de réseau couplé audit ordinateur; et
lors d'une session collaborative entre lesdits utilisateurs:
présenter une vidéo mémorisée auxdits utilisateurs, de telle sorte que lesdits utilisateurs peuvent commander la vitesse et l'emplacement de la lecture vidéo;
accepter des annotations (848) introduites par lesdits utilisateurs en association avec ladite vidéo mémorisée, lesdites annotations comprenant au moins l'une d'annotations graphiques, d'annotations de texte et d'annotations audio; et
mémoriser ladite session collaborative.

2. Procédé d'annotation dynamique d'une vidéo selon la revendication 1, incluant une étape de lecture de ladite session collaborative dans un mode synchrone pour certains desdits utilisateurs.

3. Procédé d'annotation dynamique d'une vidéo selon la revendication 2, selon lequel ledit mode synchrone est un mode essentiellement synchronisé.

4. Procédé d'annotation dynamique d'une vidéo selon la revendication 1, incluant une étape de mémorisation ou d'enregistrement d'activités visibles et de tout commentaire vocal apparaissant pendant ladite session collaborative.

5. Procédé d'annotation dynamique d'une vidéo selon la revendication 1, selon lequel ledit service de réseau comprend au moins l'une d'une connexion Internet TCP/IP, IPX, à modem et en série.

6. Procédé d'annotation dynamique d'une vidéo selon la revendication 1, selon lequel ladite étape d'acceptation d'annotations comprend l'utilisation d'au moins l'un de télé-pointeurs; de commandes d'enregistreur/de lecteur vidéo; de navigateurs vidéo, d'une annotation graphique, d'une annotation de texte et d'une annotation audio; et d'outils de création de marques dynamiques.

7. Procédé d'annotation dynamique d'une vidéo selon la revendication 6, selon lequel ledit enregistreur/lecteur vidéo présente des modes de lecture et de pause et ladite étape d'acceptation d'annotations peut être exécutée indépendamment du fait que ledit enregistreur/lecteur vidéo est dans l'un ou l'autre desdits modes.

8. Procédé d'annotation dynamique d'une vidéo selon la revendication 7, selon lequel ladite étape d'acception d'annotations peut être exécutée sur un objet dynamique de la vidéo mémorisé, et comprend les étapes consistant à:
sélectionner une première trame et une dernière trame de l'annotation, et
indiquer un contour de l'objet dynamique dans chacune de la première trame et de la dernière trame.

9. Procédé d'annotation dynamique d'une vidéo selon la revendication 7, comprenant les étapes consistant à enregistrer et lire une vidéo à partir d'un enregistreur/lecteur vidéo couplé audit dispositif d'ordinateur et possédant une interface de commande pouvant être actionnée par l'utilisateur.

10. Procédé d'annotation dynamique d'une vidéo selon la revendication 6, incluant l'étape consistant en ce que des individus parmi lesdits utilisateurs annotent des graphiques dans une incrustation.

11. Procédé d'annotation dynamique d'une vidéo selon la revendication 6, incluant les étapes consistant en ce que
des individus parmi lesdits utilisateurs utilisent un télé-pointeur; et
des parties vidéo et des parties graphiques couvertes par ledit télé-pointeur sont restaurées de façon automatique.

12. Procédé d'annotation dynamique d'une vidéo selon l'une quelconque des revendications précédente, comprenant en outre les étapes consistant en ce que des individus parmi lesdits utilisateurs lisent ou arrêtent ladite vidéo, sautent à un emplacement différent dans ladite vidéo et modifient de façon dynamique la vitesse de lecture vidéo.

13. Procédé d'annotation dynamique d'une vidéo conformément l'une quelconque des revendications précédentes, selon lequel ledit enregistreur/lecteur vidéo disponible pour chacun desdits utilisateurs est synchronisé sur la même trame vidéo chaque fois qu'une quelconque activité de VCR se produit.

14. Procédé d'annotation dynamique d'une vidéo selon l'une quelconque des revendications précédentes, incluant les étapes consistant à
appliquer une marque temporelle à tous les messages atteignant ledit dispositif d'ordinateur à partir de ladite pluralité d'utilisateurs; et
émettre certains desdits messages qui ont été annoté et pourvus d'une marque temporelle auxdits utilisateurs pendant ladite lecture.

15. Système d'annotation dynamique entre une pluralité d'utilisateurs (102, 104); ledit système comprenant:
un dispositif d'ordinateur programmable présentant des capacités de mémorisation et de récupération d'informations;
une interface d'utilisateur (820) couplée audit dispositif d'ordinateur pour exécuter la sélection d'un service de réseau; et
lors d'une session collaborative entre lesdits utilisateurs:
des moyens pour afficher une vidéo mémoriser auxdits utilisateurs, de telle sorte que lesdits utilisateurs peuvent commander la vitesse et l'emplacement de la lecteur vidéo;
des moyens pour accepter des annotations (848) introduites par lesdits utilisateurs en association avec ladite vidéo mémorisée, lesdites annotations comprenant au moins l'une d'annotations graphiques, de texte et audio (848); et
des moyens pour mémoriser ladite session collaborative.

16. Système d'annotation dynamique d'une vidéo entre une pluralité d'utilisateurs selon la revendication 15, incluant un enregistreur/lecteur vidéo utilisé en commun, couplé audit dispositif d'ordinateur et possédant une interface de commande pouvant être actionnée par l'utilisateur, pour enregistrer des activités visibles et tout commentaire vocal pendant ladite session collaborative et lire des annotations enregistrées.

17. Système d'annotation dynamique d'une vidéo entre une pluralité d'utilisateurs selon la revendication 16, incluant des moyens pour permettre auxdits utilisateurs d'annoter des graphiques dans une incrustation.

18. Système d'annotation dynamique d'une vidéo entre une pluralité d'utilisateurs selon la revendication 17, incluant des moyens pour supporter l'utilisation d'un télé-pointeur et pour restaurer des parties vidéo et graphiques couvertes par le télé-pointeur.

19. Système d'annotation dynamique d'une vidéo entre une pluralité d'utilisateurs selon l'une quelconque des revendications 15 à 18, comprenant des moyens pour appliquer une marque temporel à tous les messages atteignant ledit dispositif d'ordinateur à partir de ladite pluralité d'utilisateurs et émettre certains desdits messages qui ont été annotés et pourvus d'une marque temporelle auxdits utilisateurs pendant ladite lecture de manière à permettre à certains individus parmi ladite pluralité d'utilisateurs d'effectuer une annotation pendant ladite lecture d'annotations enregistrées.

20. Système d'annotation dynamique d'une vidéo entre une pluralité d'utilisateurs selon l'une quelconque des revendications 15 à 19, dans lequel les annotations introduits par ledit utilisateur peuvent être appliquées à un objet dynamique de la vidéo mémorisée, moyennant l'utilisation de moyens de sélection pour sélectionner une première trame et une dernière trame de l'annotation, et des moyens indicateurs pour indiquer un contour de l'objet dynamique dans chacune de la première trame et de la dernière trame.

21. Système d'annotation dynamique d'une vidéo entre une pluralité d'utilisateurs selon l'une quelconque des revendications 15 à 20, dans lequel le lecteur/enregistreur vidéo (VCR) utilisé en commun, disponible pour chacun desdits utilisateurs, possède une commande de VCR multipoint présentant un ajustement de vitesse dynamique, et une capacité de présenter des marques dynamiques.

22. Système d'annotation dynamique d'une vidéo entre une pluralité d'utilisateurs selon l'une quelconque des revendications 15 à 21, comprenant en outre une fonction, au moyen de laquelle n'importe lequel desdits utilisateurs peut lire ou arrêter ladite vidéo, sauter à un emplacement différent dans la vidéo et modifier de façon dynamique la vitesse de lecture vidéo.

23. Système d'annotation dynamique d'une vidéo entre une pluralité d'utilisateurs selon l'une quelconque des revendications 15 à 22, dans lequel ladite fonction de lecteur/enregistreur vidéo utilisé en commun, disponible pour chacun desdits utilisateurs, est synchronisé sur la même trame vidéo chaque fois qu'une quelconque activité du VCR se produit.

24. Système d'annotation dynamique d'une vidéo entre une pluralité d'utilisateurs selon l'une quelconque des revendications 15 à 23, comprenant en outre des moyens pour afficher une marque dynamique lorsqu'une trame, à laquelle une telle marque est rattachée, est affichée.

25. Système d'annotation dynamique d'une vidéo entre une pluralité d'utilisateurs selon l'une quelconque des revendications 15 à 24, dans lequel ladite fonction de lecteur/enregistreur vidéo utilisé en commun présente une fenêtre disponible pour chacun desdits utilisateurs et ladite fenêtre agit en tant que téléconférence commune avec un support de télépointeur pour supporter un dessin à main levée et un texte.

26. Système d'annotation dynamique d'une vidéo entre une pluralité d'utilisateurs selon l'une quelconque des revendications 15 à 25, dans lequel ladite fenêtre de la fonction de lecteur/enregistreur vidéo utilisé en commun agit en tant que téléconférence en commun avec un support de télépointeur pour supporter des fonctions de dessin à main levée et de texte, indépendamment de la présence d'un quelconque matériel d'incrustation graphique.

27. Système d'annotation dynamique d'une vidéo entre une pluralité d'utilisateurs selon l'une quelconque des revendications 15 à 26, dans lequel tout utilisateur peut effacer, à tout moment, une annotation graphique ou une annotation de texte.

28. Système d'annotation dynamique d'une vidéo entre une pluralité d'utilisateurs selon l'une quelconque des revendications 15 à 27, comprenant des moyens pour la fixation de l'un quelconque d'une pluralité d'outils à ladite fonction de lecteur vidéo utilisé en commun.

29. Système d'annotation dynamique d'une vidéo entre une pluralité d'utilisateurs selon l'une quelconque des revendications 15 à 28, dans lequel lorsque l'un quelconque de ladite pluralité d'outils est appelé, ces outils sont activés d'un côté, tandis qu'une sessions collaborative peut continuer.

30. Système d'annotation dynamique d'une vidéo entre une pluralité d'utilisateurs selon l'une quelconque des revendications 15 à 29, dans lequel lesdites activités de sélection collaborative incluant des commentaires vocaux joints, peuvent être enregistrées pour une lecture ultérieure.

31. Système d'annotation dynamique d'une vidéo entre une pluralité d'utilisateurs selon l'une quelconque des revendications 15 à 30, dans lequel lesdites activités de la session collaborative sont marquées temporellement pour supporter une lecture synchronisée.

32. Système d'annotation dynamique d'une vidéo entre une pluralité d'utilisateurs selon l'une quelconque des revendications 15 à 31 , dans lequel ladite session enregistrée peut être chargée et affichée d'une manière synchrone sur des écrans de tous les utilisateurs avec une commande de VCR multipoint.

33. Système d'annotation dynamique d'une vidéo entre une pluralité d'utilisateurs selon l'une quelconque des revendications 15 à 32, dans lequel les commentaires vocaux joints enregistrés sont mélangés à la piste audio d'une vidéo pendant la lecture.

34. Système d'annotation dynamique d'une vidéo entre une pluralité d'utilisateurs selon l'une quelconque des revendications 15 à 33, dans lequel n'importe quel utilisateur peut encore effectuer une annotation pendant la lecture d'une annotation enregistrée dans une session collaborative avec des commandes du VCR séparées pour créer une nouvelle annotation.

35. Système d'annotation dynamique d'une vidéo entre une pluralité d'utilisateurs selon l'une quelconque des revendications 15 à 34, dans lequel ladite nouvelle annotation peut être à nouveau enregistrée, conjointement avec la lecture d'une annotation enregistrée.
